# EUROPEAN PATENT SPECIFICATION

(11) **EP 3 854 202 B1**
(45) Date of publication and mention of the grant of the patent: **29.06.2022**
(21) Application number: 21150722.3
(22) Date of filing: 08.01.2021
(51) Int. Cl.: A01G 9/14, A01D 46/24

(54) **IMPROVED TUBE RAIL CART AND METHOD FOR HARVESTING PRODUCTS WITH SUCH AN IMPROVED TUBE RAIL CART**
VERBESSERTER ROHRSCHIENENWAGEN UND VERFAHREN ZUM ERNTEN VON PRODUKTEN MIT EINEM SOLCHEN VERBESSERTEN ROHRSCHIENENWAGEN
CHARIOT SUR RAIL TUBULAIRE AMÉLIORÉ ET PROCÉDÉ DE RÉCOLTE DE PRODUITS À L'AIDE D'UN TEL CHARIOT SUR RAIL TUBULAIRE AMÉLIORÉ

(30) Priority: 23.01.2020 BE 202005045
(43) Date of publication of application: 28.07.2021
(73) Proprietor: B&A Automation BVBA, 2320 Hoogstraten (BE)
(72) Inventor: BOGAERTS, Joris, 2960 Brecht (BE)
(74) Representative: Van hunsel, Lieven M.S.

(56) References cited:
- WO-A2-2014/011035
- BE-A1- 1 026 369

## Description

Improved tube rail cart and method for harvesting products with such an improved tube rail cart.

The present invention relates in the first place to an improved tube rail cart.

More specifically, the present invention relates to such a tube rail cart which is fit for riding on tubes of a horticultural greenhouse (typically on heating tubes) and which is intended for harvesting products such as fruits and vegetables with, wherein the tube rail cart has a loading floor intended for stacking packagings on, such as boxes, crates or the like, for harvested products while harvesting.

According to the present state of the art, many types of tube rail carts are already known, all of which are more or less suitable for harvesting products or for working on plants in a greenhouse.

Documents WO 2014/011035 A2 and BE 1 026 369 A1 describe such tube rail carts.

In many cases, with such a well-known tube rail cart, the harvester stands on the loading platform of the tube rail cart.

A disadvantage of these well-known tube rail carts is that a lot of space is taken up by the harvester himself.

While harvesting, the tube rail cart also supplies empty packagings which are to be filled with the harvested products.

Empty packagings are manually supplied to the harvester, while full packagings are manually removed and stacked on the loading platform.

Another disadvantage of the known tube rail carts is that it is far from easy to carry out the aforementioned activities of supplying, removing and stacking packagings in an efficient manner while harvesting, irrespective of whether the user or harvester is seated on the tube rail cart itself or walks beside the tube rail cart while harvesting.

Moreover, it requires great dexterity and physical effort from the harvester.

A further disadvantage of working with the known tube rail carts is that a lot of time is lost in this way while harvesting.

It is therefore an object of the invention to provide a solution to one or several of the aforesaid problems and any other possible problems.

In particular, it is an object of the invention to provide an improved tube rail cart wherein harvesting, and in particular the handling and stacking of empty and full packagings on the tube rail cart, is performed automatically as much as possible.

Yet another object of the invention is to achieve a smooth interaction between the harvester and the automated tube rail cart, allowing the harvester to fully concentrate on harvesting and wherein the other operations of supplying and removing empty and full packagings and stacking them efficiently are left entirely to the machine.

In this regard, it is in particular an object of the invention to bring about an automation wherein the harvester does not have to perform any operations or only to a very limited extent to control the automated functions of the tube rail cart.

To this end, the invention relates to an improved tube rail cart as defined in claim 1, fit for riding on tubes of a horticultural greenhouse and intended for harvesting products such as fruits and vegetables with, wherein the tube rail cart has a loading floor or loading space for stacking packagings on, such as boxes, crates or the like, for harvested products while harvesting, wherein the tube rail cart is provided with a work platform on at least one of the front sides, more particularly on the front or the rear or on both sides, which is intended to allow a user to fill empty packagings standing on the work platform with harvested products, wherein the tube rail cart is further provided with an automated handling system for automatically supplying empty and removing full packagings between the loading floor or loading space and a work platform, and vice versa, and for efficiently stacking empty and full packagings on the loading floor or in the loading space without any direct user intervention.

A first major advantage of such a tube rail cart according to the invention is that the tube rail cart is provided with a work platform on at least one of the front sides, which is preferably foldable, so that a user or harvester can stand beside the tube rail cart to harvest products and put them in packagings standing on an folded-out work platform, and wherein the full packagings can be removed from this work platform to the loading platform of the tube rail cart.

In this way, the harvester can adopt a comfortable position while harvesting and the entire loading platform is free for handling and stacking empty and full packagings, wherein moreover the harvester himself is not an obstacle during this handling.

Another major advantage of such a tube rail cart according to the invention is that the tube rail cart is provided with an automated handling system.

This automated handling system relieves the harvester of the tasks associated with supplying empty packagings, removing full packagings and stacking them and/or moving them, so that the harvester can fully engage in the manual harvesting of the products.

In a preferred embodiment of an improved tube rail cart according to the invention, the improved tube rail cart is provided with a frame above the loading platform, the automated handling system is provided with a hoisting device that can be moved up and down and is suitable for lifting packagings and putting them back down, and the hoisting device is suspended at the top of the frame from an automatic positioning section which can be moved back and forth along the length of the tube rail cart.

A major advantage of such a tube rail cart according to the invention is that the combination of a positioning section which can be moved back and forth and a hoisting device which can be moved up and down with respect to this positioning section makes it possible to reach packagings on the loading platform, lift them and put them back down in a very efficient manner, and thus to move and stack them in all possible configurations.

In a preferred embodiment of an improved tube rail cart according to the invention, the automated handling system is provided with detection means, control means and a management system, wherein the management system keeps track of the position of the different packagings on the tube rail cart.

Preferably, the detection means can detect the presence or absence of a packaging in one or more positions and/or the detection means can detect one or more states of a packaging, in particular the completely filled state, the completely empty state and/or a partially filled state of such a packaging.

It is clear that, depending on the embodiment and requirements, detection means may be provided which can perform more or less of the aforementioned functions.

A major advantage of such an embodiment of a tube rail cart according to the invention is that the detection means can detect certain situations such as the presence of a packaging or the state of such a packaging, typically while harvesting, so that based on the detected situation, packagings can be handled with the control means without the need for intervention by a user or harvester.

In yet another preferred embodiment of a tube rail cart according to the invention, the control means therein control the positioning section in order to place it above a packaging to be picked up or above a position where a lifted packaging is to be placed, and the control means control the gripping and releasing by the hoisting device, as well as the up and down movement of the hoisting device.

It is clear that such control means can be realised relatively easily, as these control means have to control the movement of packagings, which mainly takes place in only two directions.

More specifically, the control devices make a hoisting device move up and down in a vertical direction with respect to a positioning section, and the control means move the positioning section in a direction along the length of the tube rail cart.

A further preferred aspect of an improved tube rail cart according to the invention is that the automated handling system performs a sequence including at least the following:
(a) supplying an empty packaging from the loading platform and placing this empty packaging on a folded-out work platform in a nearby position close to the loading platform of the tube rail cart;
(b) monitoring the nearby position with the detection means to determine whether a user has brought a full packaging to this position and, in the meantime, supplying a subsequent empty packaging to a waiting position above the nearby position;
(c) placing the next empty packaging on top of the full packaging as soon as it has been brought to the nearby position by a user;
(d) monitoring the nearby position with the detection means to determine whether a user has removed the empty packaging which was placed on top of the full packaging;
(e) removing the full packaging to the loading platform as soon as the empty packaging has been removed from the full packaging by a user; and
f) repeating steps a to e for as long as there is being harvested on the folded-out work platform and successively removed full packagings are being stacked on the loading platform.

A major advantage of such a tube rail cart according to the invention is that its automated handling system performs a series of successive actions, such that a harvester can continue harvesting undisturbed.

A full packaging being placed in a specific position close to the loading platform by the harvester is used here as a trigger or impulse to supply the next empty packaging and remove the full packaging.

The harvester can thereby continue harvesting in a completely natural manner without having to worry at all about removing the full packagings, stacking them and supplying empty packagings.

The invention also relates to a method for harvesting products with an improved tube rail cart according to the invention, as described above.

Such a method according to the invention is defined in claim 15 and comprises at least the following steps:
a) the automatic lowering of a work platform of the tube rail cart by the automated handling system;
b) the automatic supply of an empty packaging from the loading platform and placing this empty packaging on the work platform in a nearby position close to the loading platform of the tube rail cart by the automated handling system;
(c) the removal of the empty packaging from the nearby position to a remote position further away from the loading platform of the tube rail cart by the user;
(d) the monitoring with detection means of the nearby position by the automated handling system in order to check whether the user has brought a full packaging to the nearby position and, in the meantime, the supply of a subsequent empty packaging to a waiting position above the nearby position by the automated handling system;
(e) a full packaging being moved to the nearby position by a user;
(f) the next empty packaging being placed on top of the full packaging by the automated handling system as soon as it has been placed in the nearby position by a user;
g) the removal of the empty packaging that was placed on the full packaging by the user;
(h) monitoring with the detection means of the nearby position by the automated handling system to determine whether a user has removed the empty packaging which was placed on top of the full packaging; and
(i) the removal of the full packaging to the loading platform by the automated handling system as soon as the empty packaging has been removed from the full packaging by the user;
(j) stacking of the removed full packagings on the loading platform by the automated handling system; and
(k) repeating the foregoing steps b to j on the folded-out work platform as long as harvesting continues.

It is clear that with such a method according to the invention, a very good cooperation between user and machine is achieved, wherein certain actions of the user which completely fit within the framework of harvesting are detected by the tube rail cart, which on the basis thereof further handles the removal of full and the supply of empty packagings, as well as the stacking thereof, fully independently and automatically.

In a preferred embodiment of an improved tube rail cart according to the invention for implementing a preferred method according to the invention, the tube rail is configured such that the tube rail cart can be driven automatically from a hardened strip to a desired position on a pair of tubes between plants, and the harvesting can be automatically started and stopped by folding out and putting back a work platform, respectively, in a fully automatic manner.

With such an embodiment of an improved tube rail cart according to the invention, a very far-reaching automation of the harvesting process is obtained.

In order to better explain the characteristics of the invention, the following preferred embodiment of a tube rail cart according to the invention as well as a method for using such a tube rail cart are described hereafter by way of example only without being limitative in any way, with reference to the accompanying figures, in which:
figure 1 shows a view in perspective of a possible embodiment of an improved tube rail cart according to the invention, wherein the work platforms are in a stowed position;
figure 2 is a side view according to arrow F2 of the improved tube rail cart in figure 1;
figure 3 is a top view according to arrow F3 of the improved tube rail cart in figure 1;
figure 4 is a bottom view according to arrow F4 of the improved tube rail cart in figure 1;
figure 5 is a rear view according to arrow F5 of the improved tube rail cart from figure 1;
figure 6 shows a view in perspective as in figure 1, but with both work platforms of the improved tube rail cart being folded-out;
figure 7 schematically illustrates in plan view and on a smaller scale the movement of an improved tube rail cart to the tube rails of a horticultural greenhouse;
figures 8 to 16 included schematically and in side view illustrate successive steps during harvesting with an improved tube rail cart according to the invention in accordance with a method according to the invention; and,
figure 17 schematically illustrates yet another possible embodiment of a tube rail cart according to the invention.

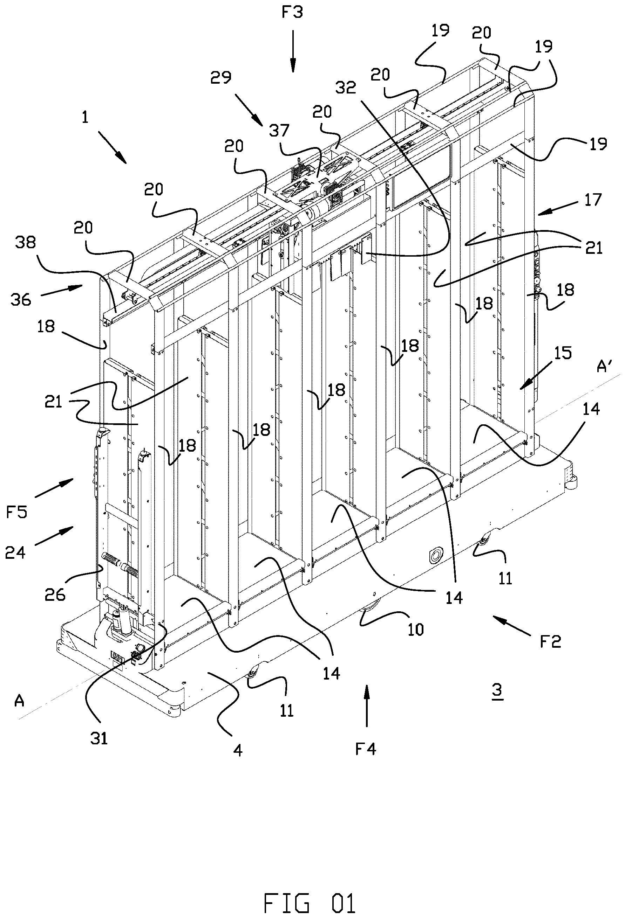

Figure 1 shows an improved tube rail cart 1, fit for riding on a pair of round tubes 2 of a horticultural greenhouse 3, which are arranged parallel to each other.

To this end, the tube rail cart 1 is provided with an undercarriage 4 which can ride over the tubes 2 by means of a pair of tube rail front wheels 5 mounted on a front axle 6 and a pair of tube rail rear wheels 7 mounted on a rear axle 8.

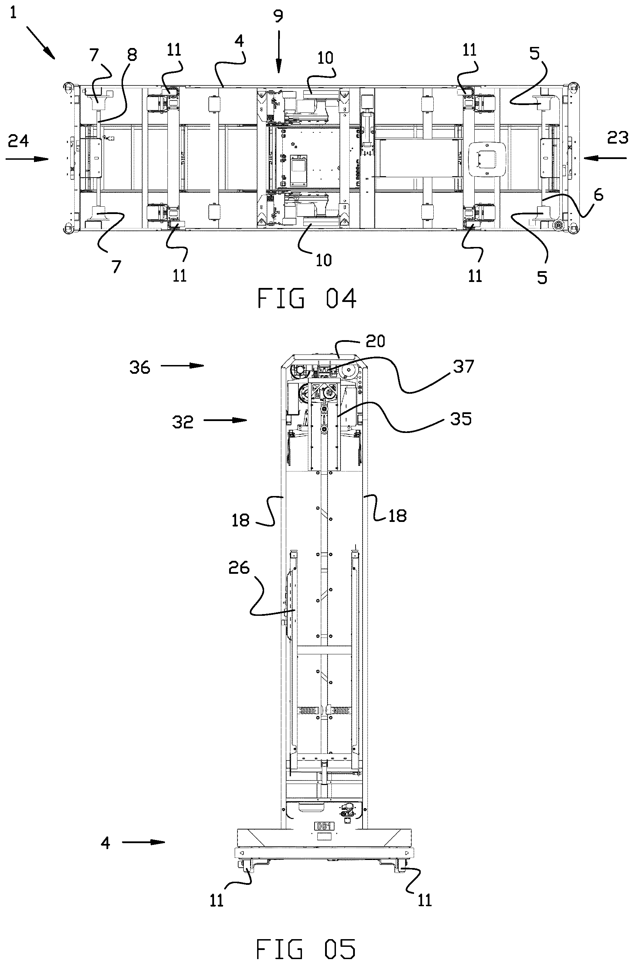

This is illustrated in more detail in the bottom view of figure 4.

The tube rail front wheels 5 and the tube rail rear wheels 7 can be fitted over the pair of round tubes 2 and to this end they are profiled according to the round shape of the tubes 2, so that the tube rail cart 1 remains on the tubes 2 and is always guided by these tubes 2 when the tube rail cart 1 is placed on the tubes 2.

The tube rail cart 1 is also provided with drive means 9 for moving the tube rail cart 1 over the tubes 2, for example in the form of a pair of central wheels 10 driven by an electric motor or the like.

The tube rail cart 1 is further provided with a set of four swivel wheels 11 which are rotatable around a vertical axis and which enable the tube rail cart 1 to ride over a hardened surface 12, such as, for example, a concrete path between rows of plants of the horticultural greenhouse 3.

The tube rail cart 1 is intended to harvest products 13 such as fruit and vegetables with.

To this end, the tube rail cart 1 has a loading floor 14 which is provided at the top 15 of the undercarriage and which is intended for stacking packagings 16 on, such as boxes, crates or the like, for harvested products 13 while harvesting.

Above the loading platform 14, the tube rail cart 1 is in this case provided with a metal frame 17 which is essentially beam-shaped and which is composed of upright ribs 18 extending vertically from the undercarriage 4, longitudinal ribs 19 extending along the longitudinal direction AA' of the tube rail cart 1 and transverse ribs 20 which are transverse to the longitudinal direction AA'.

In the case of the figures, the improved tube rail cart 1 is also provided with partitions 21 in the form of plates 21 extending vertically and which are separated from each other at regular intervals D along the longitudinal direction AA' of the tube rail cart 1.

This intermediate distance D corresponds to a dimension of the packagings 16, so that compartments 22 are formed in which packagings 16 can be placed on top of each other in a fitting manner.

According to the invention, the tube rail cart 1 is further provided with a work platform 25 or 26 on at least one of the front sides 23 and 24, more particularly on the front side 23 or the rear side 24 or on both sides 23 and 24.

Preferably, the work platforms 25 and 26 can be folded out, as is also the case in the examples of the figures, but in another embodiment such work platform 25 or 26 may just as well be fixed.

In the case of the figures, both the front side 23 and the rear side 24 have work platforms 25 and 26, respectively.

These work platforms 25 and 26 are intended to allow a user or harvester 30 to fill empty packagings 16 standing on the work platform 25 or 26 with harvested products 13.

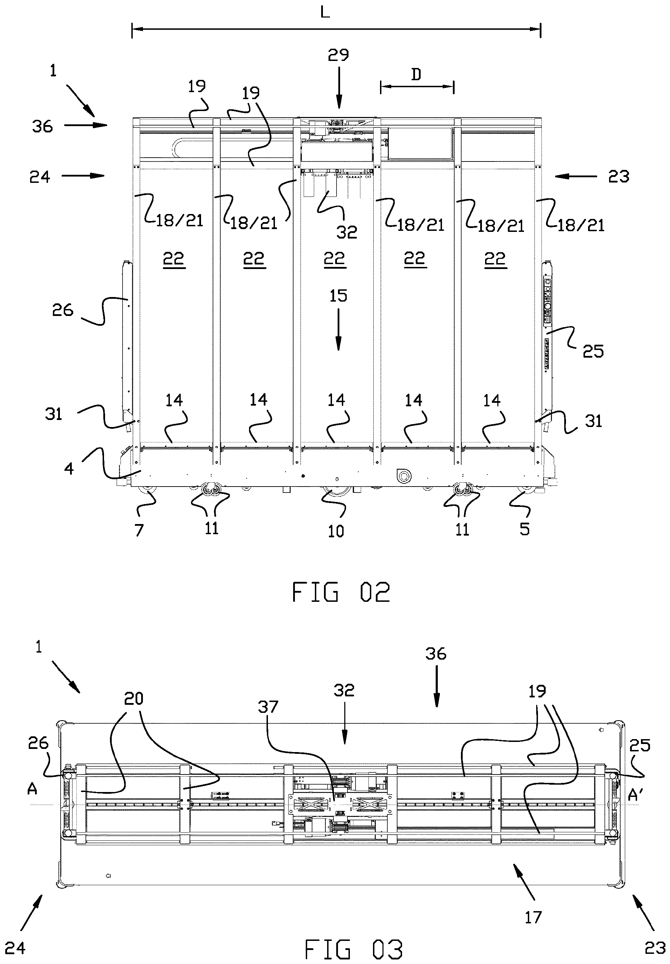

In the embodiment of figures 1 to 6, the work platforms 25 and 26 simply consist of a pair of parallel beams 27 and 28 which are interconnected by an intermediate cross beam 29 and by the frame 17.

More specifically, the work platforms 25 and 26 are hinge-mounted at one end 31 to the corresponding front side 23 or 24 of the tube rail cart 1, for example to the corresponding section of the frame 17 of the tube rail cart 1.

In a stowed state, these work platforms 25 and 26 extend vertically against the frame 17.

This situation is shown, for example, in figure 1 and will typically occur in practice when the tube rail cart 1 is moved to another part of the horticultural greenhouse 3.

For use during harvesting, such work platform 25 or 26 is put into a folded-out state wherein it extends horizontally from the respective front side 23 or 24.

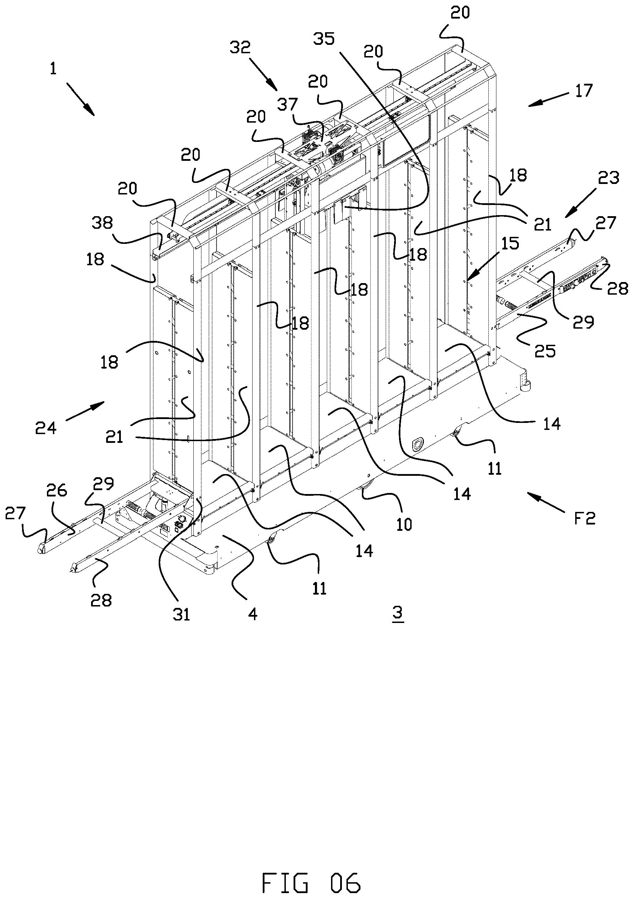

Such a state is shown, for example, in figure 6.

According to the invention, the work platforms 25 and 26 can preferably also be moved up and down or adjusted over the relevant front side 23 or 24 of the tube rail cart 1 for a vertical positioning V thereof according to a working height H which is fit for a user or harvester 30.

A very important aspect of the invention consists in that the improved tube rail cart 1 is further provided with an automated handling system 32 for automatically supplying empty packagings 33 and removing full packagings 34 between the loading floor 14 and a folded-out work platform 25 or 26, and vice versa, and for efficiently stacking empty packagings 33 and full packagings 34 on the loading floor 14 without any direct intervention of the user or harvester 30.

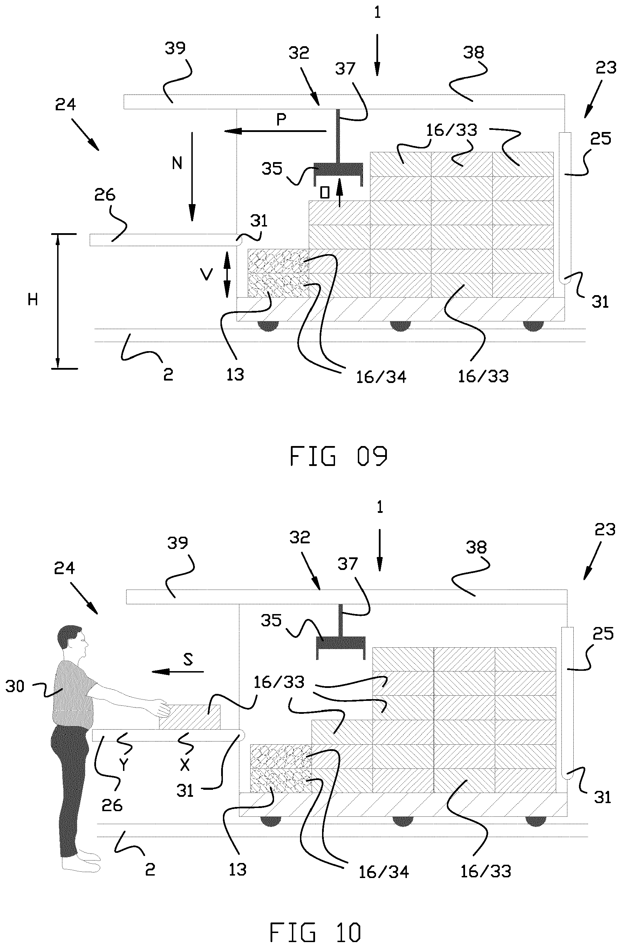

For this purpose, the automated handling system 32 is provided with a hoisting device 35 which can be moved up and down, as shown, for example, by arrows O and N in figure 9, and which is suitable for lifting and putting down packagings 16.

The hoisting device 32 is suspended at the top 36 of the frame 17 from an automatic positioning section 37 which can be moved back and forth along the length L of the tube rail cart 1, as shown for example by arrow P in figure 9.

The partitions 21 extend vertically below the automatic positioning section 37, so that packagings 16 can pass over the partitions 21.

The automatic positioning section 37 can ride on a rail 38 extending from the top 36 of the frame 17 according to the longitudinal direction AA' of the tube rail cart 1.

According to the invention, the rail 38 is designed as extended, extendable or slidable to and fro in the frame 17, so that it extends or can extend with a section 39 over a folded-out work platform 25 or 26 of the tube rail cart 1.

As already mentioned in the introduction, the automated handling system 32 is preferably provided with detection means, control means and a management system, the management system keeping track of the position of the various packagings 16 on the tube rail cart 1.

These detection means, control means and this management system are not indicated in detail in the figures.

Preferably, the detection means can detect the presence or absence of a packaging 16 in one or more positions and/or the detection means can detect one or more states of a packaging 16, in particular the fully filled state, the fully empty state and/or a partially filled state of such a packaging 16.

Other preferred characteristics of the automated handling system 32 were already listed in the introduction.

In any event, the aim is that the automated handling system 32 be designed such that empty packagings 33 are efficiently and automatically brought close to the user or harvester 30 by putting them on a folded-out work platform 25 or 26 and such that full packagings 34 filled with products 13 by said user or harvester 30 are automatically and efficiently removed from the respective work platform 25 or 26 to the loading platform 14 and stacked there on top of each other.

The automated handling system 32 herein performs certain sequences, such that a user or harvester 30 can harvest with the tube rail cart 1 without having to worry about supplying and removing packagings 16 to its loading platform 14.

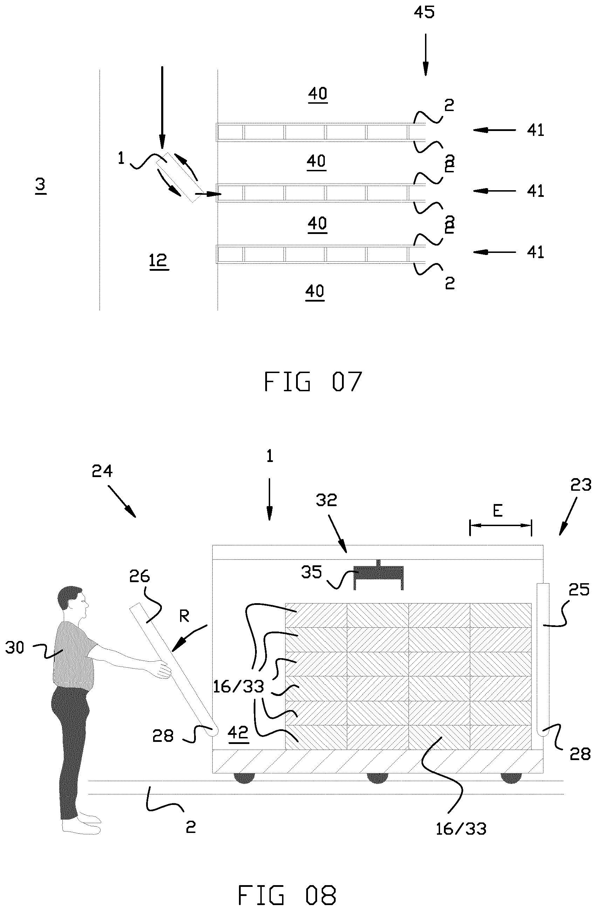

The conditions which the automated handling system 32 must meet to this end will become clear from an illustration of the use of an improved tube rail cart 1 according to the invention, in accordance with a method according to the invention, which will be explained below by means of figures 7 to 16.

Figure 7 illustrates how a horticultural greenhouse 3 is typically configured such that a pair of tubes 41 is provided each time between rows of plants 40 on which an improved tube rail cart 4 according to the invention can ride.

Transverse to the rows of plants 40, a hardened strip 12 is provided on which the tube rail cart 1 can be wheeled with the swivel wheels 11 to a pair of tubes 41 in a desired position between the rows of plants 40 in order to start harvesting there.

Preferably, an improved tube rail cart 1 according to the invention is provided with drive means with which the tube rail cart 1 is automatically driven over the hardened strip 12 into a determined position on a pair of tubes 41 between rows of plants 40.

In doing so, the tube rail cart 1 preferably performs the manoeuvres itself for turning on the hardened strip 12 or the concrete path 12 in order to turn to the row of tubes 41.

Alternatively, the tube rail cart 1 may also be designed such that such displacement can also be done manually or can only be done manually.

Figure 8 illustrates a first step of a method according to the invention for harvesting with an improved tube rail cart 1 according to the invention.

According to the invention, preferably in the initial state, when the automated handling system 32 is started up for harvesting, the tube rail cart 1 is arranged such that it is filled with empty packagings 33 stacked in successive compartments 22 of the tube rail cart 1.

Preferably, the first compartment 42, which is closest to the work platform 25 or 26 to be folded-out for harvesting, is kept entirely empty.

In the first step of the method according to the invention, the automated handling system 32 or a user 30 should fold down a work platform 25 or 26 of the tube rail cart 1, for example by performing a rotational movement according to arrow R.

After folding out the work platform 25 or 26, the automated handling system 32 automatically supplies an empty packaging 33 from the loading platform 14 by a combination of up and down movements O and N of the hoisting device 35 and a movement P of the positioning section 37 according to the longitudinal direction AA' of the tube rail cart 1 and places this empty packaging 33 on the folded-out work platform 25 or 26 in a nearby position X close to the loading platform 14 of the tube rail cart 1.

Thereafter, the user 30 should remove the empty packaging 33 from the nearby position X and move it to a remote position Y, which is further away from the loading platform 14 of the tube rail cart 1, as indicated in figure 10 by arrow S.

When the empty packaging 33 has been brought into the remote position Y, the user 30 can start harvesting and the empty packaging 33 can be filled with harvested products 13.

Meanwhile, the nearby position X is monitored by the automated handling system 32, for example with the aid of its detection means in order to check whether the user 30 has returned a full packaging 34 to the nearby position X, while in the meantime the automated handling system 32 supplies a following empty packaging 33 to a waiting position Z above the nearby position X by means of an upward movement O of the hoisting device 35 and a forward movement P of the positioning section 37.

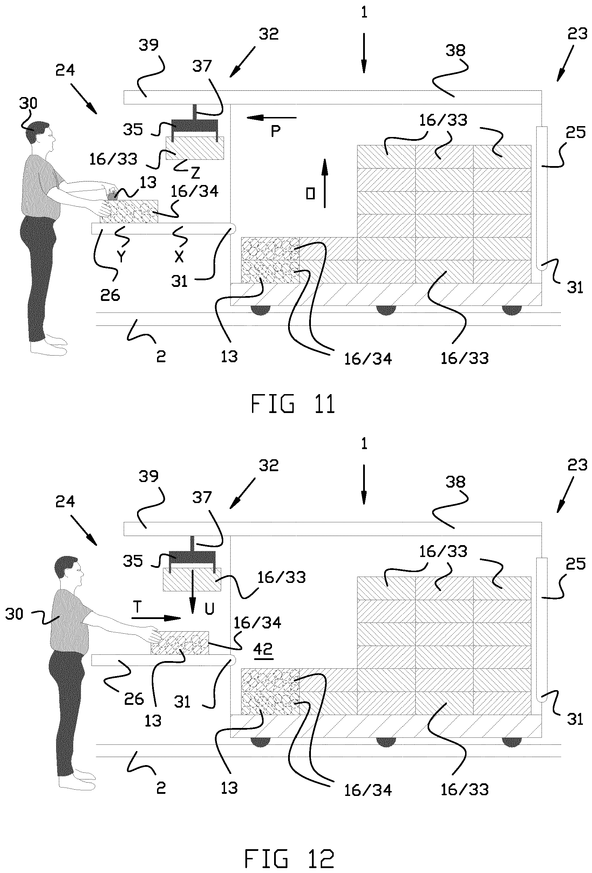

All this is illustrated in figures 9 and 11.

After the user 30 has filled the packaging 16 with harvested products 13 in the remote position Y, the filled packaging 34 is shifted back to the nearby position X by the user 30, which is illustrated in figure 12 with arrow T.

This state triggers an action of the automated handling system 32 wherein the next empty packaging 33 is placed on top of the full packaging 34 as of the waiting position Z, which is shown by arrow U in figure 12.

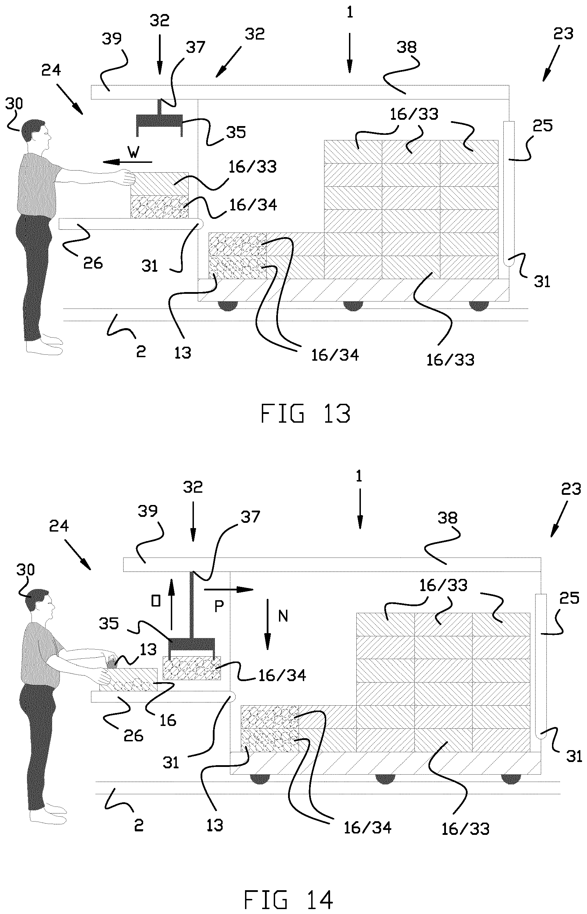

The user 30 then removes the empty packaging 33, which was placed on the full packaging 34 by the automated handling system 32 by a movement illustrated by arrow W in figure 13.

Meanwhile, the nearby position X is being monitored with the detection means of the automated handling system 32 in order to check whether the user 30 has removed the empty packaging 33 which had been placed on the full packaging 34.

As soon as the empty packaging 33 has been effectively removed from the full packaging 34 by the user 30, the automated handling system 32 is reactivated, and the full packaging 34 is removed to the loading platform 14 by the automated handling system 32 via a combination of an upward movement O and a downward movement N of the hoisting device 35 and a movement P according to the longitudinal direction AA' of the positioning section 37.

The full packagings 34 which have been removed by the automated handling system 32 are thereby stacked on top of each other on the loading platform 14.

According to the invention, full packagings 34 are herein preferably stacked first in the first compartment 42 and then in subsequent compartments 22.

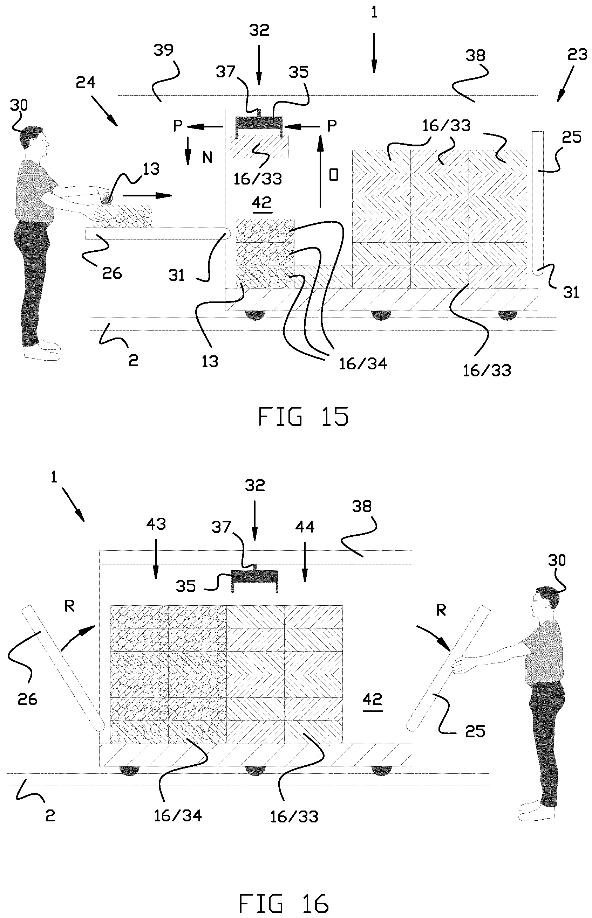

This is illustrated in figures 14 and 15.

Meanwhile, the user 30 continues harvesting and the previous steps, shown in figures 11 to 15, are repeated until it is decided to stop harvesting, or to stop harvesting using the respective work platforms 25 or 26.

In a preferred method according to the invention, wherein the improved tube rail cart 1 is provided with two work platforms 25 and 26 on the two opposite front sides 23 and 24 of the tube rail cart 1 as shown in the figures, the automated handling system 32 goes through a first sequence during harvesting to reach a first section 43 of the compartments 22, closest to a first work platform 25, stacks full packagings 34 on top of each other, and then the automated handling system 32 goes through a second sequence to stack full packagings 34 on top of each other in a second section 44 of the compartments 22 closest to the second work platform 26.

The first section 43 of compartments 22 and the second section 44 of compartments 22 may each correspond to one half of the compartments 22 or occupy a portion which is larger or smaller than one half of the compartments 22.

The automated handling system 32 or the user 30, after having reached the end 45 of the aisle at the location of the respective pair of tubes 41 or after the user 30 has given a manual input to that end to the automated handling system 32, thereby brings this first work platform 26 into a stowed position, and the automated handling system 32 or the user 30 folds out a second work platform 25 provided on the opposite front side 23 of the tube rail cart 1, and thereafter performs a sequence which is completely analogous as with regard to the harvesting on the first work platform 26.

This working method is schematically illustrated by way of example in figure 16.

In a typical sequence, the automated handling system 32 according to the invention will first fold out the work platform 26 closest to the hardened strip 12, and only thereafter the other work platform 25.

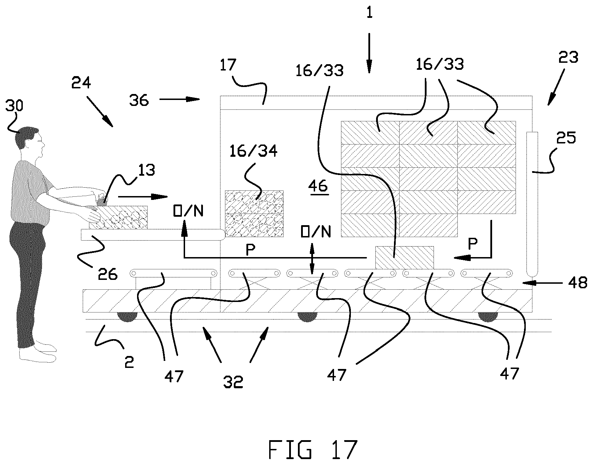

Figure 17 shows yet another embodiment of a tube rail cart 1 in accordance with the invention.

In this case, the automated handling system 32 is completely different, with the packagings 16, 33 or 34 being rotated in a loading space 46 of the tube rail cart 1 by means of the automated manipulation system 32 and being moved between this loading space 46 and a work platform 25 or 26 while harvesting.

The automated handling system 32 this time consists of vertically upward moving (according to arrow O) and downward moving (according to arrow N) conveyor belts 47 which are provided next to each other on the underside 48 of the tube rail cart 1 under the loading space 46.

The conveyor belts 46 can transport the packagings 16, 33 and 34 (according to arrow P, and vice versa) and lower them/push them up (according to arrows N and O) in the desired column or in the desired compartment 22 of the loading space 46.

## Claims

1. Improved tube rail cart (1) fit for riding on tubes (2) of a horticultural greenhouse (3) and which is intended for harvesting products (13) such as fruit and vegetables with, wherein the tube rail cart (1) has a loading floor (14) or loading space (46) intended for stacking packagings (16) on, such as boxes, crates or the like, for harvested products (13) while harvesting, wherein the tube rail cart (1) is provided with a work platform (25, 26) on at least one of the front sides (23, 24), more particularly on the front side (23) or the rear side (24) or on both sides (23, 24), which is intended to allow a user or harvester (30) to fill empty packagings (16, 33) standing on the work platform (25, 26) with harvested products (13), **characterised in that** the tube rail cart (1) is further provided with an automated handling system (32) for automatically supplying empty packagings (16, 33) and removing full packagings (16, 34) between the loading floor (14) or loading space (46) and a work platform (25, 26), and vice versa, and for efficiently stacking empty packagings (16, 33) and full packagings (16, 34) on the loading floor (14) or in the loading space (46) without any direct intervention of the user or harvester (30).

2. Improved tube rail cart (1) according to claim 1, **characterised in that** the work platform (25, 26) or the work platforms (25, 26) can be folded out or are arranged between a stowed position in which it extends mainly vertically up against the tube rail cart (1) and a folded-out position in which the work platform (25, 26) extends horizontally from the relevant front side (23, 24) .

3. Improved tube rail cart (1) according to claim 1 or 2, **characterised in that** the tube rail cart (1) is provided with a frame (17) above the loading platform (14), the automated handling system (32) being provided with a hoisting device (35) that can be moved up and down and is suitable for lifting packagings (16) and putting them back down, wherein the hoisting device (35) is suspended at the top (36) of the frame (17) from an automatic positioning section (37) which can be moved back and forth over the length (L) of the tube rail cart (1).

4. Improved tube rail cart (1) according to one or several of the preceding claims, **characterised in that** the automatic positioning section (37) can ride over a rail (3) which extends at the top (36) of the frame (17) in the longitudinal direction (AA') of the tube rail cart (1) .

5. Improved tube rail cart (1) according to claim 4, **characterised in that** the rail (38) is designed as extended, extendable or slidable to and fro, so that it extends or can extend with a section (39) above a folded-out work platform (25, 26) of the tube rail cart (1).

6. Improved tube rail cart (1) according to one or several of claims 3 to 5, **characterised in that** the frame (17) of the tube rail cart (1) is essentially beam-shaped and wherein the tube rail cart (1) is provided with partitions (21) extending vertically under the automatic positioning section (37) and separated from one another at a regular distance (D) in the longitudinal direction (AA') of the tube rail cart (1), corresponding to a dimension (E) of the packagings (16), so as to form compartments (22) in which packagings (16) can be stacked on top of one another in a fitting manner.

7. Improved tube rail cart (1) according to one or several of the preceding claims, **characterised in that** one work platform (25, 26) or both work platforms (25, 26) can be moved up and down over the relevant front side (23, 24) of the tube rail cart (1) for a vertical positioning (V) thereof according to a working height (H) which is fit for a user or harvester (30).

8. Improved tube rail cart (1) according to one or several of the preceding claims, **characterised in that** the automated handling system (32) is provided with detection means, control means and a management system, wherein the management system keeps track of the position of the different packagings (16) on the tube rail cart (1).

9. Improved tube rail cart (1) according to claim 8, **characterised in that** the detection means can detect the presence or absence of a packaging (16) in one or more positions and/or can detect one or several states of a packaging (16), in particular the completely filled state, the completely empty state and/or a partially filled state of such a packaging (16).

10. Improved tube rail cart (1) according to claim 8 or 9, **characterised in that** the control means control the positioning section (37) in order to place it above a packaging (16) to be picked up or above a position where a lifted packaging (16) is to be put down, and wherein the control means control the gripping and releasing by the hoisting device (35), as well as the up and down movement of the hoisting device (35).

11. Improved tube rail cart (1) according to one or several of the preceding claims, **characterised in that** the tube rail cart (1) is provided with drive means with which the tube rail cart (1) is automatically driven over a hardened strip (12) and into a determined position on a pair of tubes (41) between rows of plants (40), wherein the tube rail cart (1) automatically performs the manoeuvres itself for turning on the hardened strip (12) in order to turn to the row of tubes (41).

12. Improved tube rail cart (1) according to one or several of claims 8 to 11, **characterised in that** the automated handling system (32) performs a sequence including at least the following:
a) supplying an empty packaging (16, 33) from the loading platform (14) and placing this empty packaging (16, 33) on a work platform (25, 26) in a nearby position (X) close to the loading platform (14) of the tube rail cart (1);
b) monitoring the nearby position (X) with the detection means to determine whether a user (30) has brought a full packaging (16, 34) to this nearby position (X) and, in the meantime, supplying a subsequent empty packaging (16, 33) to a waiting position (Z) above the nearby position (X);
c) placing the next empty packaging (16, 33) on top of the full packaging (16, 34) as soon as it has been brought to the nearby position (X) by a user (30);
d) monitoring the nearby position (X) with the detection means to determine whether a user (30) has removed the empty packaging (16, 33) which was placed on top of the full packaging (16, 34);
e) removing the full packaging (16, 34) to the loading platform (14) as soon as the empty packaging (16, 33) has been removed from the full packaging (16, 34) by a user (30); and,
f) repeating steps a to e for as long as there is being harvested on the work platform (25, 26) and stacking successive removed full packagings (16, 34) on the loading platform (14).

13. Improved tube rail cart (1) according to claim 12, **characterised in that**, in the initial situation, when the automated handling system (32) is started up, empty packagings (16, 33) are stacked in successive compartments (22), wherein the first compartment (42), which is closest to a work platform (25, 26) to be folded out or to be used while harvesting, is kept entirely empty and wherein, while harvesting, full packagings (16, 34) are first stacked in the first compartment (42) and then in subsequent compartments (22).

14. Improved tube rail cart (1) according to claim 12 or 13, **characterised in that** the tube rail cart (1) is provided with two work platforms (25, 26) on the two opposite front sides (23, 24) of the tube rail cart (1), wherein the automated handling system (32) goes through a first sequence while harvesting to reach a first section (43) of the compartments (22), closest to a first work platform (26), stacks full packagings (16, 34) on top of each other and then goes through a second sequence to stack full packagings (16, 34) on top of each other in a second section (44) of the compartments (22) closest to the second work platform (25).

15. Method for harvesting products (13) with an improved tube rail cart (1) according to one or several of the preceding claims, **characterised in that** the method comprises at least the following steps:
a) the automatic lowering of a work platform (25, 26) of the tube rail cart (1) by the automated handling system (32) or by a user (30);
b) the automatic supply of an empty packaging (16, 33) from the loading platform (14) and placing this empty packaging (16, 33) on the work platform (25, 26) folded out by the user (30) in a nearby position (X) close to the loading platform (14) of the tube rail cart (1) by the automated handling system (32);
c) the removal of the empty packaging (16, 33) from the nearby position (X) to a remote position (Y) further away from the loading platform (14) of the tube rail cart (1) by the user (30);
d) the monitoring with detection means of the nearby position (X) by the automated handling system (32) in order to check whether the user (30) has brought a full packaging (16, 34) to the nearby position (X) and, in the meantime, the supply of a subsequent empty packaging (16, 33) to a waiting position (Z) above the nearby position (X) by the automated handling system (32);
e) a full packaging (16, 34) being moved to the nearby position (X) by the user (30);
f) the next empty packaging (16, 33) being placed on top of the full packaging (16, 34) by the automated handling system (32) as soon as it has been placed in the nearby position (X) by a user (30);
g) the removal of the empty packaging (16, 33) that was placed on the full packaging (16, 34) by the user (3);
h) monitoring with the detection means of the nearby position (X) by the automated handling system (32) to determine whether a user (30) has removed the empty packaging (16, 33) which was placed on top of the full packaging (16, 34);
i) the removal of the full packaging (16, 34) to the loading platform (14) by the automated handling system (32) as soon as the empty packaging (16, 33) has been removed from the full packaging (16, 34) by the user (30) ;
j) stacking of the removed full packagings (16, 34) on the loading platform (14) by the automated handling system (32); and,
k) repeating the foregoing steps b to j as long as harvesting continues on the folded-out work platform (25, 26).

16. Method according to claim 15, **characterised in that** in the initial situation, when the automated handling system (32) is started up, empty packagings (16, 33) are stacked in successive compartments (22) by the user (30) or by the automated handling system (32), wherein the first compartment (42), which is closest to the work platform (25, 26) to be folded out first, is kept entirely empty and wherein, while harvesting, full packagings (16, 34) are first stacked in the first compartment (42) by the automated handling system (32) and then in subsequent compartments (22).

17. Method according to claim 15 or 16, **characterised in that** the automated handling system (32) or the user (30), after the end (45) of an aisle at the location of the respective pair of tubes (41) has been reached, or after the user (30) has given a manual input to the automated handling system (32) to that end, brings a first work platform (25, 26) into a stowed position and folds out a second work platform (25, 26) provided on the opposite front side (23, 24) of the tube rail cart (1), wherein the automated handling system (32) goes through a first sequence while harvesting in order to stack full packagings (16, 33) on top of one another in a first section (43) of the compartments (22), closest to the first work platform (26), and then goes through a second sequence to stack full packagings (16, 34) on top of one another in a second section (44) of the compartments (22), closest to the second work platform (25) .

18. Method according to one or several of claims 15 to 17, **characterised in that** the tube rail cart (1) is driven automatically from a hardened strip (12) to a desired position on a pair of tubes (41), and the harvesting is started and stopped fully automatically by folding out and putting back, respectively, a work platform (25, 26) .

## Patentansprüche

1. Verbesserter Röhrenschienenwagen (1), der zum Fahren auf Röhren (2) eines Gartenbaugewächshauses (3) geeignet ist und der zum Ernten von Erzeugnissen (13) wie etwa Obst und Gemüse vorgesehen ist, wobei der Röhrenschienenwagen (1) einen Ladeboden (14) oder einen Laderaum (46) aufweist, der zum Stapeln von Verpackungen (16), wie etwa Boxen, Kisten oder dergleichen, für geerntete Erzeugnisse (13) während dem Ernten vorgesehen ist, wobei der Röhrenschienenwagen (1) mit einer Arbeitsplattform (25, 26) auf wenigstens einer der Vorderseiten (23, 24), insbesondere auf der Vorderseite (23) oder der Rückseite (24) oder auf beiden Seiten (23, 24), versehen ist, die vorgesehen ist, um es einem Benutzer oder einer Erntemaschine (30) zu ermöglichen, leere Verpackungen (16, 33), die auf der Arbeitsplattform (25, 26) stehen, mit geernteten Erzeugnissen (13) zu füllen, **dadurch gekennzeichnet, dass** der Röhrenschienenwagen (1) ferner mit einem automatisierten Handhabungssystem (32) zum automatischen Zuführen von leeren Verpackungen (16, 33) und Entfernen von vollen Verpackungen (16, 34) zwischen dem Ladeboden (14) oder dem Laderaum (46) und einer Arbeitsplattform (25, 26), und umgekehrt, und zum effizienten Stapeln von leeren Verpackungen (16, 33) und vollen Verpackungen (16, 34) auf dem Ladeboden (14) oder in dem Laderaum (46) ohne direkten Eingriff des Benutzers oder der Erntemaschine (30) versehen ist.

2. Verbesserter Röhrenschienenwagen (1) nach Anspruch 1, **dadurch gekennzeichnet, dass** die Arbeitsplattform (25, 26) oder die Arbeitsplattformen (25, 26) ausklappbar sind oder zwischen einer verstauten Position, in der sie sich hauptsächlich vertikal nach oben gegen den Röhrenschienenwagen (1) erstreckt, und einer ausgeklappten Position, in der sich die Arbeitsplattform (25, 26) von der relevanten Vorderseite (23, 24) horizontal erstreckt, angeordnet sind.

3. Verbesserter Röhrenschienenwagen (1) nach Anspruch 1 oder 2, **dadurch gekennzeichnet, dass** der Röhrenschienenwagen (1) mit einem Rahmen (17) oberhalb der Ladeplattform (14) versehen ist, wobei das automatisierte Handhabungssystem (32) mit einer Hubvorrichtung (35) versehen ist, die auf und ab bewegt werden kann und die zum Anheben und wieder Absetzen von Verpackungen (16) angemessen ist, wobei die Hubvorrichtung (35) an der Oberseite (36) des Rahmens (17) von einem automatischen Positionierungsabschnitt (37) aufgehängt ist, der über die Länge (L) des Röhrenschienenwagens (1) hin und her bewegt werden kann.

4. Verbesserter Röhrenschienenwagen (1) nach einem oder mehreren der vorhergehenden Ansprüche, **dadurch gekennzeichnet, dass** der automatische Positionierungsabschnitt (37) über eine Schiene (3) fahren kann, die sich an der Oberseite (36) des Rahmens (17) in der Längsrichtung (AA') des Röhrenschienenwagens (1) erstreckt.

5. Verbesserter Röhrenschienenwagen (1) nach Anspruch 4, **dadurch gekennzeichnet, dass** die Schiene (38) als erstreckt, erstreckbar oder hin und her verschiebbar aufgebaut ist, so dass sie sich mit einem Abschnitt (39) über einer ausgeklappten Arbeitsplattform (25, 26) des Röhrenschienenwagens (1) erstreckt oder erstrecken kann.

6. Verbesserter Röhrenschienenwagen (1) nach einem oder mehreren der Ansprüche 3 bis 5, **dadurch gekennzeichnet, dass** der Rahmen (17) des Röhrenschienenwagens (1) im Wesentlichen balkenförmig ist und wobei der Röhrenschienenwagen (1) mit Trennwänden (21) versehen ist, die sich unter dem automatischen Positionierungsabschnitt (37) vertikal erstrecken und in einem regelmäßigen Abstand (D) in der Längsrichtung (AA') des Röhrenschienenwagens (1) voneinander getrennt sind, der einer Abmessung (E) der Verpackungen (16) entspricht, um Fächer (22) auszubilden, in denen Verpackungen (16) aufeinander geeignet gestapelt werden können.

7. Verbesserter Röhrenschienenwagen (1) nach einem oder mehreren der vorhergehenden Ansprüche, **dadurch gekennzeichnet, dass** eine Arbeitsplattform (25, 26) oder beide Arbeitsplattformen (25, 26) über die relevante Vorderseite (23, 24) des Röhrenschienenwagens (1) für eine vertikale Positionierung (V) davon gemäß einer Arbeitshöhe (H) bewegt werden können, die für einen Benutzer oder eine Erntemaschine (30) geeignet ist.

8. Verbesserter Röhrenschienenwagen (1) nach einem oder mehreren der vorhergehenden Ansprüche, **dadurch gekennzeichnet, dass** das automatisierte Handhabungssystem (32) mit Erkennungsmitteln, Steuermitteln und einem Verwaltungssystem versehen ist, wobei das Verwaltungssystem die Position der verschiedenen Verpackungen (16) auf dem Röhrenschienenwagen (1) verfolgt.

9. Verbesserter Röhrenschienenwagen (1) nach Anspruch 8, **dadurch gekennzeichnet, dass** die Erkennungsmittel das Vorhandensein oder das Nichtvorhandensein einer Verpackung (16) an einer oder mehreren Positionen erkennen können und/oder einen oder mehrere Zustände einer Verpackung (16) erkennen kann, insbesondere den vollständig gefüllten Zustand, den vollständig leeren Zustand und/oder einem teilweise gefüllten Zustand einer solchen Verpackung (16).

10. Verbesserter Röhrenschienenwagen (1) nach Anspruch 8 oder 9, **dadurch gekennzeichnet, dass** die Steuermittel den Positionierungsabschnitt (37) steuern, um ihn über eine aufzuhebende Verpackung (16) oder über eine Position, an der eine angehobene Verpackung (16) abgesetzt werden soll, zu platzieren, und wobei die Steuermittel das Ergreifen und Lösen durch die Hubvorrichtung (35) sowie die Auf- und Abbewegung der Hubvorrichtung (35) steuern.

11. Verbesserter Röhrenschienenwagen (1) nach einem oder mehreren der vorhergehenden Ansprüche, **dadurch gekennzeichnet, dass** der Röhrenschienenwagen (1) mit Antriebsmitteln versehen ist, mit denen der Röhrenschienenwagen (1) über einen gehärteten Streifen (12) automatisch und in eine bestimmte Position auf einem Paar von Röhren (41) zwischen Reihen von Pflanzen (40) angetrieben wird, wobei der Röhrenschienenwagen (1) die Manöver selbst zum Einschalten des gehärteten Streifens (12) automatisch durchführt, um sich zu der Reihe von Röhren (41) zu drehen.

12. Verbesserter Röhrenschienenwagen (1) nach einem oder mehreren der Ansprüche 8 bis 11, **dadurch gekennzeichnet, dass** das automatisierte Handhabungssystem (32) eine Sequenz durchführt, die wenigstens das Folgende beinhaltet:
a) Zuführen einer leeren Verpackung (16, 33) von der Ladeplattform (14) und Platzieren dieser leeren Verpackung (16, 33) auf einer Arbeitsplattform (25, 26) in einer nahe gelegenen Position (X) nahe der Ladeplattform (14) des Röhrenschienenwagens (1);
b) Überwachen der nahe gelegenen Position (X) mit den Erkennungsmitteln, um zu bestimmen, ob ein Benutzer (30) eine volle Verpackung (16, 34) zu dieser nahe gelegenen Position (X) gebracht hat, und in der Zwischenzeit, Zuführen einer nachfolgenden leeren Verpackung (16, 33) zu einer Warteposition (Z) über der nahe gelegenen Position (X);
c) Platzieren der nächsten leeren Verpackung (16, 33) auf der vollen Verpackung (16, 34), sobald sie durch einen Benutzer (30) in die nahe gelegene Position (X) gebracht wurde;
d) Überwachen der nahe gelegenen Position (X) mit den Erkennungsmitteln, um zu bestimmen, ob ein Benutzer (30) die leere Verpackung (16, 33) entfernt hat, die auf der vollen Verpackung (16, 34) platziert wurde;
e) Entfernen der vollen Verpackung (16, 34) zu der Ladeplattform (14), sobald die leere Verpackung (16, 33) durch einen Benutzer (30) aus der vollen Verpackung (16, 34) entfernt wurde; und,
f) Wiederholen der Schritte a bis e, solange auf der Arbeitsplattform (25, 26) geerntet wird, und Stapeln von aufeinanderfolgenden entfernten vollen Verpackungen (16, 34) auf der Ladeplattform (14).

13. Verbesserter Röhrenschienenwagen (1) nach Anspruch 12, **dadurch gekennzeichnet, dass**, in der Ausgangssituation, wenn das automatisierte Handhabungssystem (32) in Betrieb genommen wird, leere Verpackungen (16, 33) in aufeinanderfolgenden Fächern (22) gestapelt sind, wobei das erste Fach (42), das einer Arbeitsplattform (25, 26) am nächsten ist, die ausgeklappt werden soll oder die während des Erntens verwendet werden soll, vollständig leer gehalten wird, und wobei, während des Erntens, volle Verpackungen (16, 34) zuerst in dem ersten Fach (42) und dann in nachfolgenden Fächern (22) gestapelt werden.

14. Verbesserter Röhrenschienenwagen (1) nach Anspruch 12 oder 13, **dadurch gekennzeichnet, dass** der Röhrenschienenwagen (1) an den zwei gegenüberliegenden Vorderseiten (23, 24) des Röhrenschienenwagens (1) mit zwei Arbeitsplattformen (25, 26) versehen ist, wobei das automatisierte Handhabungssystem (32) während des Erntens eine erste Sequenz durchläuft, um einen ersten Abschnitt (43) der Fächer (22) zu erreichen, die einer ersten Arbeitsplattform (26) am nächsten sind, volle Verpackungen (16, 34) übereinander stapelt und dann eine zweite Sequenz durchläuft, um volle Verpackungen (16, 34) in einem zweiten Abschnitt (44) der Fächer (22), die der zweiten Arbeitsplattform (25) am nächsten sind, übereinander zu stapeln.

15. Verfahren zum Ernten von Produkten (13) mit einem verbesserten Röhrenschienenwagen (1) nach einem oder mehreren der vorhergehenden Ansprüche, **dadurch gekennzeichnet, dass** das Verfahren wenigstens die folgenden Schritte umfasst:
a) das automatische Absenken einer Arbeitsplattform (25, 26) des Röhrenschienenwagens (1) durch das automatisierte Handhabungssystem (32) oder durch einen Benutzer (30);
b) die automatische Zufuhr einer leeren Verpackung (16, 33) von der Ladeplattform (14) und das Platzieren dieser leeren Verpackung (16, 33) auf der Arbeitsplattform (25, 26), die durch den Benutzer (30) ausgeklappt ist, in einer nahe gelegenen Position (X) nahe der Ladeplattform (14) des Röhrenschienenwagens (1) durch das automatisierte Handhabungssystem (32);
c) das Entfernen der leeren Verpackung (16, 33) aus der nahe gelegenen Position (X) zu einer entfernten Position (Y), die von der Ladeplattform (14) des Röhrenschienenwagens (1) weiter entfernt ist, durch den Benutzer (30);
d) das Überwachen der nahe gelegenen Position (X) mit Erkennungsmitteln durch das automatisierte Handhabungssystem (32), um zu überprüfen, ob der Benutzer (30) eine volle Verpackung (16, 34) zu der nahe gelegenen Position (X) gebracht hat, und, in der Zwischenzeit, die Zufuhr einer nachfolgenden leeren Verpackung (16, 33) zu einer Warteposition (Z) über der nahe gelegenen Position (X) durch das automatisierte Handhabungssystem (32);
e) eine volle Verpackung (16, 34), die durch den Benutzer (30) in die nahe gelegene Position (X) bewegt wird;
f) das Platzieren der nächsten leeren Verpackung (16, 33) durch das automatisierte Handhabungssystem (32) auf die volle Verpackung (16, 34), sobald sie durch einen Benutzer (30) in die nahe gelegene Position (X) platziert wurde;
g) das Entfernen der leeren Verpackung (16, 33), die durch den Benutzer (3) auf die volle Verpackung (16, 34) platziert wurde;
h) Überwachen der nahe gelegenen Position (X) mit den Erkennungsmitteln durch das automatisierte Handhabungssystem (32), um zu bestimmen, ob ein Benutzer (30) die leere Verpackung (16, 33), die auf der vollen Verpackung (16, 34) platziert wurde, entfernt hat;
i) die Entfernung der vollen Verpackung (16, 34) zu der Ladeplattform (14) durch das automatisierte Handhabungssystem (32), sobald die leere Verpackung (16, 33) durch den Benutzer (30) aus der vollen Verpackung (16, 34) entfernt wurde;
j) Stapeln der entfernten vollen Verpackungen (16, 34) auf der Ladeplattform (14) durch das automatisierte Handhabungssystem (32); und,
k) Wiederholen der vorstehenden Schritte b bis j, solange auf der ausgeklappten Arbeitsplattform (25, 26) geerntet wird.

16. Verfahren nach Anspruch 15, **dadurch gekennzeichnet, dass**, in der Ausgangssituation, wenn das automatisierte Handhabungssystem (32) in Betrieb genommen wird, leere Verpackungen (16, 33) in aufeinanderfolgenden Fächern (22) durch den Benutzer (30) oder durch das automatisierte Handhabungssystem (32) gestapelt werden, wobei das erste Fach (42), das der Arbeitsplattform (25, 26) am nächsten ist, die zuerst ausgeklappt werden soll, vollständig leer gehalten wird, und wobei, während des Erntens, volle Verpackungen (16, 34) zuerst in dem ersten Fach (42) durch das automatisierte Handhabungssystem (32) und dann in nachfolgenden Fächern (22) gestapelt werden.

17. Verfahren nach Anspruch 15 oder 16, **dadurch gekennzeichnet, dass** das automatisierte Handhabungssystem (32) oder der Benutzer (30), nachdem das Ende (45) eines Ganges an dem Ort des jeweiligen Röhrenpaares (41) erreicht ist, oder nachdem der Benutzer (30) zu diesem Zweck eine manuelle Eingabe in das automatisierte Handhabungssystem (32) gegeben hat, eine erste Arbeitsplattform (25, 26) in eine verstaute Position bringt und eine zweite Arbeitsplattform (25, 26), die auf der gegenüberliegenden Vorderseite (23, 24) des Röhrenschienenwagens (1) bereitgestellt ist, ausklappt, wobei das automatisierte Handhabungssystem (32) während dem Ernten eine erste Sequenz durchläuft, um volle Verpackungen (16, 33) in einem ersten Abschnitt (43) der Fächer (22), die der ersten Arbeitsplattform (26) am nächsten sind, übereinander zu stapeln, und dann eine zweite Sequenz durchläuft, um volle Verpackungen (16, 34) in einem zweiten Abschnitt (44) der Fächer (22), die der zweiten Arbeitsplattform (25) am nächsten sind, übereinander zu stapeln.

18. Verfahren nach einem oder mehreren der Ansprüche 15 bis 17, **dadurch gekennzeichnet, dass** der Röhrenschienenwagen (1) von einem gehärteten Streifen (12) zu einer gewünschten Position auf einem Paar von Röhren (41) automatisch angetrieben wird und das Ernten gestartet wird und durch Ausklappen beziehungsweise Zurücksetzen einer Arbeitsplattform (25, 26) vollautomatisch gestoppt wird.

## Revendications

1. Chariot sur rail tubulaire perfectionné (1) conçu pour se déplacer sur des tubes (2) d'une serre horticole (3) et qui est destiné à la récolte de produits (13) tels que des fruits et des légumes, dans lequel le chariot sur rail tubulaire (1) possède un plancher de chargement (14) ou un espace de chargement (46) qui est destiné à l'empilement de conditionnements (16) tels que des boîtes, des caisses ou analogues, pour des produits récoltés (13) au cours de la récolte, dans lequel le chariot sur rail tubulaire (1) est équipé d'une plateforme de travail (25, 26) sur au moins un des côtés avant (23, 24), plus particulièrement sur le côté avant (23) ou sur le côté arrière (24) ou sur les deux côtés (23, 24), qui est destinée à permettre à un utilisateur ou à un préposé à la récolte (30) de remplir des conditionnements vides (16, 33) en se tenant debout sur la plateforme de travail (25, 26) avec des produits récoltés (13) ; **caractérisé en ce que** le chariot sur rail tubulaire (1) est en outre équipé d'un système de manipulation automatisé (32) qui est destiné à alimenter de manière automatique des conditionnements vides (16, 33) et à retirer des conditionnements pleins (16, 34) entre le plancher de chargement (14) ou l'espace de chargement (46) et une plateforme de travail (25, 26), et vice versa, et pour empiler de manière efficace des conditionnements vides (16, 33) et des conditionnements pleins (16, 34) sur le plancher de chargement (14) ou dans l'espace de chargement (46) sans aucune intervention directe de la part de l'utilisateur ou du préposé à la récolte (30).

2. Chariot sur rail tubulaire perfectionné (1) conformément à la revendication 1, **caractérisé en ce que** la plateforme de travail (25, 26) ou les plateformes de travail (25, 26) peut/peuvent être déployée(s) ou est/sont arrangée(s) entre une position repliée dans laquelle elle(s) s'étend(ent) principalement dans la direction verticale contre le chariot sur rail tubulaire (1) et une position déployée dans laquelle la plateforme de travail (25, 26) s'étend dans la direction horizontale à partir du côté avant correspondant (23, 24).

3. Chariot sur rail tubulaire perfectionné (1) conformément à la revendication 1 ou 2, **caractérisé en ce que** le chariot sur rail tubulaire (1) est équipé d'un encadrement (17) au-dessus de la plateforme de chargement (14), le système de manipulation automatisé (32) étant équipé d'un dispositif de levage (35) qui peut être déplacé vers le haut et vers le bas et qui est approprié pour soulever des conditionnements (16) et pour les redescendre, dans lequel le dispositif de levage (35) est suspendu au sommet (36) de l'encadrement (17) à partir d'un tronçon de positionnement automatique (37) que l'on peut soumettre à un déplacement en va-et-vient sur la longueur (L) du chariot sur rail tubulaire (1).

4. Chariot sur rail tubulaire perfectionné (1) conformément à une ou plusieurs des revendications précédentes, **caractérisé en ce que** le tronçon de positionnement automatique (37) peut être déplacé par dessus un rail (3) qui s'étend au sommet (36) de l'encadrement (17) dans la direction longitudinale (AA') du chariot sur rail tubulaire (1).

5. Chariot sur rail tubulaire perfectionné (1) conformément à la revendication 4, **caractérisé en ce que** le rail (38) est conçu sous une forme étendue, sous une forme extensible ou sous une forme telle qu'il peut coulisser dans un mouvement de va-et-vient, d'une manière telle qu'il s'étend ou qu'il peut s'étendre avec un tronçon (39) au-dessus d'une plateforme de travail déployée (25, 26) du chariot sur rail tubulaire (1).

6. Chariot sur rail tubulaire perfectionné (1) conformément à une ou plusieurs des revendications 3 à 5, **caractérisé en ce que** l'encadrement (17) du chariot sur rail tubulaire (1) possède une configuration, de manière essentielle, sous la forme d'une poutre, et dans lequel le chariot sur rail tubulaire (1) est équipé de parois de séparation (21) qui s'étendent dans la direction verticale en dessous du tronçon de positionnement automatique (37) et qui sont séparées les unes des autres sur une distance régulière (D) dans la direction longitudinale (AA') du chariot sur rail tubulaire (1), d'une manière qui correspond à une dimension (E) des conditionnements (16), de façon à former des compartiments (22) dans lesquels des conditionnements (16) peuvent être empilés les uns sur les autres de la manière qui convient.

7. Chariot sur rail tubulaire perfectionné (1) conformément à une ou plusieurs des revendications précédentes, **caractérisé en ce qu'**une plateforme de travail (25, 26) ou les deux plates-formes de travail (25, 26) peut/peuvent être soumise(s) à un déplacement vers le haut et vers le bas sur le côté avant correspondant (23, 24) du chariot sur rail tubulaire (1) à des fins de positionnement vertical (V) de ladite ou desdites plates-formes de travail, en conformité avec une hauteur de travail (H) qui convient à un utilisateur ou à un préposé à la récolte (30).

8. Chariot sur rail tubulaire perfectionné (1) conformément à une ou plusieurs des revendications précédentes, **caractérisé en ce que** le système de manipulation automatisé (32) est équipé d'un moyen de détection, d'un moyen de commande et d'un système de gestion ; dans lequel le système de gestion conserve une trace de la position des conditionnements différents (16) sur le chariot sur rail tubulaire (1).

9. Chariot sur rail tubulaire perfectionné (1) conformément à la revendication 8, **caractérisé en ce que** le moyen de détection est capable de détecter la présence ou l'absence d'un conditionnement (16) dans une ou plusieurs positions et/ou est capable de détecter un ou plusieurs états d'un conditionnement (16), en particulier l'état complètement rempli, l'état complètement vide et/ou un état partiellement rempli d'un conditionnement (16) de ce type.

10. Chariot sur rail tubulaire perfectionné (1) conformément à la revendication 8 ou 9, **caractérisé en ce que** le moyen de commande commande le tronçon de positionnement (37) dans le but de le placer au-dessus d'un conditionnement (16) qui doit être saisi ou au-dessus d'une position dans laquelle un conditionnement (16) qui a été soulevé doit être déposé ; et dans lequel le moyen de commande commande la préhension et la libération par l'intermédiaire du dispositif de levage (35), ainsi que le mouvement vers le haut et vers le bas du dispositif de levage (35).

11. Chariot sur rail tubulaire perfectionné (1) conformément à une ou plusieurs des revendications précédentes, **caractérisé en ce que** le chariot sur rail tubulaire (1) est équipé d'un moyen d'entraînement avec lequel le chariot sur rail tubulaire (1) est entraîné d'une manière automatique par-dessus un feuillard durci (12) et dans une position déterminée sur une paire de tubes (41) entre des rangées de plantes (40) ; dans lequel le chariot sur rail tubulaire (1) effectue les manoeuvres lui-même de manière automatique pour négocier un virage sur le feuillard durci (12) dans le but de virer dans la direction de la rangée de tubes (41).

12. Chariot sur rail tubulaire perfectionné (1) conformément à une ou plusieurs des revendications 8 à 11, **caractérisé en ce que** le système de manipulation automatisé (32) exécute une séquence qui comprend au moins les actions indiquées ci-après :
a) l'alimentation d'un conditionnement vide (16, 33) à partir de la plateforme de chargement (14) et le placement de ce conditionnement vide (16, 33) sur une plateforme de travail (25, 26) dans une position se trouvant à proximité (X) proche de la plateforme de chargement (14) du chariot sur rail tubulaire (1) ;
b) la surveillance de la position se trouvant à proximité (X) avec le moyen de détection dans le but de déterminer le fait de savoir si un utilisateur (30) a amené ou non un conditionnement plein (16,34) dans cette position se trouvant à proximité et, dans le même temps, alimenter un conditionnement vide ultérieur (16, 33) à une position d'attente (Z) au-dessus de la position se trouvant à proximité (X) ;
c) placer le conditionnement vide suivant (16, 33) par-dessus le conditionnement plein (16, 34), dès qu'il a été amené à la position se trouvant à proximité (X) par l'intermédiaire d'un utilisateur (30) ;
d) surveiller la position se trouvant à proximité (X) avec le moyen de détection dans le but de déterminer le fait de savoir si un utilisateur (30) a retiré ou non le conditionnement vide (16, 33) qui avait été placé par-dessus le conditionnement plein (16, 34) ;
e) retirer le conditionnement plein (16, 34) en direction de la plateforme de chargement (14) dès que le conditionnement vide (16, 33) a été retiré du conditionnement plein (16, 34) par l'intermédiaire d'un utilisateur (30) ; et
f) répéter les étapes a à e tout au long du laps de temps qui correspond à la récolte sur la plateforme de travail (25, 26) et empiler des conditionnements pleins (16, 34) qui ont été successivement retirés, sur la plateforme de chargement (14).

13. Chariot sur rail tubulaire perfectionné (1) conformément à la revendication 12, **caractérisé en ce que**, dans la situation de départ, lorsque le système de manipulation automatisé (32) a été déclenché, des conditionnements vides (16, 33) sont empilés dans des compartiments successifs (22) ; dans lequel le premier compartiment (42), qui est situé à un endroit le plus proche d'une plateforme de travail (25, 26) qui doit être déployée ou qui doit être utilisée au cours de la récolte, est maintenu entièrement vide ; et dans lequel, au cours de la récolte, des conditionnements pleins (16, 34) sont d'abord empilés dans le premier compartiment (42) et ensuite dans les compartiments suivants (22).

14. Chariot sur rail tubulaire perfectionné (1) conformément à la revendication 12 ou 13, **caractérisé en ce que** le chariot sur rail tubulaire (1) est équipé de deux plates-formes de travail (25, 26) sur les deux côtés avant opposés (23, 24) du chariot sur rail tubulaire (1) ; dans lequel le système de manipulation automatisé (32) passe par une première séquence au cours de la récolte afin d'atteindre un premier tronçon (43) des compartiments (22), le plus proche d'une première plateforme de travail (26), empile des conditionnements pleins (16, 34) les uns par-dessus les autres et passe ensuite par une deuxième séquence dans le but d'empiler des conditionnements pleins (16, 34) les uns par-dessus les autres dans un deuxième tronçon (44) des compartiments (22), le plus proche de la deuxième plateforme de travail (25).

15. Procédé destiné à la récolte de produits (13) avec un chariot sur rail tubulaire perfectionné (1) conformément à une ou plusieurs des revendications précédentes, **caractérisé en ce que** le procédé comprend au moins les étapes suivantes dans lesquelles :
a) on abaisse d'une manière automatique une plateforme de travail (25, 26) du chariot sur rail tubulaire (1), par l'intermédiaire du système de manipulation automatisé (32) ou par l'intermédiaire d'un utilisateur (30) ;
b) on alimente de manière automatique un conditionnement vide (16, 33) à partir de la plateforme de chargement (14) et on place ce conditionnement vide (16, 33) sur le plateforme de travail (25, 26) qui a été déployée par l'intermédiaire de l'utilisateur (30) dans une position se trouvant à proximité (X) proche de la plateforme de chargement (14) du chariot sur rail tubulaire (1), par l'intermédiaire du système de manipulation automatisé (32) ;
c) on retire le conditionnement vide (16,33) à partir de la position se trouvant à proximité (X) dans la direction d'une position éloignée (Y) se trouvant plus loin par rapport à la plateforme de chargement (14) du chariot sur rail tubulaire (1), par l'intermédiaire de l'utilisateur (30) ;
d) on surveille, avec le moyen de détection, la position se trouvant à proximité (X) par l'intermédiaire du système de manipulation automatisé (32) dans le but de vérifier le fait de savoir si l'utilisateur (30) a amené ou non un conditionnement plein (16, 34) dans la position se trouvant à proximité (X) et, dans le même temps, on alimente un conditionnement vide ultérieur (16, 33) dans une position d'attente (Z) au-dessus de la position se trouvant à proximité (X), par l'intermédiaire du système de manipulation automatisé (32) ;
e) on déplace un conditionnement plein (16, 34) en direction de la position se trouvant à proximité (X), par l'intermédiaire de l'utilisateur (30) ;
f) on place le conditionnement vide suivant (16, 33) par-dessus le conditionnement plein (16, 34), par l'intermédiaire du système de manipulation automatisé (32) dès qu'il a été placé dans la position se trouvant à proximité (X), par l'intermédiaire d'un utilisateur (30) ;
g) on retire le conditionnement vide (16, 33) qui avait été placé sur le conditionnement plein (16, 34), par l'intermédiaire de l'utilisateur (30) ;
h) on surveille, avec le moyen de détection, la position se trouvant à proximité (X), par l'intermédiaire du système de manipulation automatisé (32), afin de déterminer le fait de savoir si un utilisateur (30) a retiré ou non le conditionnement vide (16, 33) qui avait été placé par-dessus le conditionnement plein (16, 34) ;
i) on retire le conditionnement plein (16, 34) dans la direction de la plateforme de chargement (14), par l'intermédiaire du système de manipulation automatisé (32), dès que le conditionnement vide (16, 33) a été retiré à partir du conditionnement plein (16, 34), par l'intermédiaire de l'utilisateur (30) ;
j) on empile les conditionnements pleins (16, 34) qui ont été retirés, sur la plateforme de chargement (14), par l'intermédiaire du système de manipulation automatisé (32) ; et
k) on répète les étapes précédentes b à j tout au long de la poursuite du processus de récolte sur la plateforme de travail (25, 26) qui a été déployée.

16. Procédé conformément à la revendication 15, **caractérisé en ce que**, dans la situation de départ, lorsque le système de manipulation automatisé (32) a été déclenché, des conditionnements vides (16, 33) sont empilés dans des compartiments successifs (22), par l'intermédiaire de l'utilisateur (30) ou par l'intermédiaire du système de manipulation automatisé (32) ; dans lequel le premier compartiment (42), qui est situé le plus près de la plateforme de travail (25, 26) qui doit être déployée en premier lieu, est maintenu entièrement vide ; et dans lequel, au cours de la récolte, des conditionnements pleins (16, 34) sont d'abord empilés dans le premier compartiment (42), par l'intermédiaire du système de manipulation automatisé (32), et ensuite dans les compartiments suivants (22).

17. Procédé conformément à la revendication 15 ou 16, **caractérisé en ce que** le système de manipulation automatisé (32) ou l'utilisateur (30), une fois que l'extrémité (45) d'une allée, à l'endroit correspondant à la paire respective de tubes (41), a été atteinte, ou après que l'utilisateur (30) a introduit, dans le système de manipulation automatisé (32), une entrée manuelle à cet effet, amène une première plateforme de travail (25, 26) dans une position repliée et déploie une deuxième plateforme de travail (25, 26) qui est prévue sur le côté avant opposé (23, 24) du chariot sur rail tubulaire (1) ; dans lequel le système de manipulation automatisé (32) passe par une première séquence, au cours de la récolte, dans le but d'empiler des conditionnements pleins (16, 33) les uns par-dessus les autres dans un premier tronçon (43) des compartiments (22), à un endroit le plus proche de la première plateforme de travail (26), et passe ensuite par une deuxième séquence dans le but d'empiler des conditionnements pleins (16, 34) les uns par-dessus les autres dans un deuxième tronçon (44) des compartiments (22), à un endroit le plus proche de la deuxième plateforme de travail (25).

18. Procédé conformément à une ou plusieurs des revendications 15 à 17, **caractérisé en ce que** le chariot sur rail tubulaire (1) est entraîné d'une manière automatique à partir d'un feuillard durci (12) jusqu'à une position désirée sur une paire de tubes (41), et la récolte est déclenchée et stoppée de manière complètement automatique par l'intermédiaire d'un déploiement et d'un repliement, respectivement, d'une plateforme de travail (25, 26).
